# EUROPEAN PATENT APPLICATION

(11) **EP 3 118 451 A1**
(43) Date of publication of application: **18.01.2017**
(21) Application number: 15760846.4
(22) Date of filing: 03.03.2015
(51) Int. Cl.: F03D 7/04, F03D 1/06, F03D 13/00

(54) **STATUS MONITORING SYSTEM AND STATUS MONITORING METHOD**

(30) Priority: 11.03.2014 JP 2014047722; 20.03.2014 JP 2014058414
(71) Applicant: NTN Corporation, Osaka-shi, Osaka 550-0003 (JP)
(72) Inventor: KOYAMACHI, Kazuki, Kuwana-shi Mie 511-0811 (JP); HASEBA, Takashi, Kuwana-shi Mie 511-0811 (JP); TAKEUCHI, Akitoshi, Kuwana-shi Mie 511-0811 (JP); HASHIZUME, Keisuke, Kuwana-shi Mie 511-0811 (JP)
(74) Representative: Bockhorni & Kollegen
(86) International application number: PCT/JP2015/056159
(87) International publication number: WO 2015/137189

(57) **Abstract**

A wind turbine (100) includes vibration sensors (90A-90F) for detecting conditions of apparatuses in the wind turbine (100). Each of detection outputs of the vibration sensors (90A-90F) is transmitted to an information processing device (200). The information processing device (200) is arranged inside a support column (40) of the wind turbine (100). The information processing device (200) transmits the detection outputs to a management server (300) over a network (900).

## Description

### TITLE OF INVENTION

Condition Monitoring System and Condition Monitoring Method

### TECHNICAL FIELD

The present disclosure relates to monitoring the condition of a system, and particularly to monitoring the conditions of apparatuses provided in a wind turbine.

### BACKGROUND ART

Various techniques for managing the operating condition of a wind turbine at a remote place have conventionally been proposed. For example, Japanese Patent Laying-Open No. 2002-349415 discloses a local area network for facilitating monitoring the operating condition of a wind turbine at a remote place. In the local area network, a wind turbine generator, a server and a monitoring device are connected together with optical fibers.

If an apparatus to be monitored is housed in a nacelle in the wind turbine generator, it may not be possible to connect with optical fibers or the like the server and a device for data collection in the nacelle in which data detected by a sensor has been accumulated. In such a case, the accumulated data may be transmitted from that device to the server using a mobile network.

A data collection device which collects data detected by a sensor for detecting the condition of an apparatus housed in a nacelle may be arranged inside the nacelle. In this case, there may be a situation in which the data collection device and a server for managing information about the apparatus cannot be connected with existing optical fibers or the like over a LAN (Local Area Network) in the above-described nacelle. In such a situation, the data detected by the sensor may be accumulated in the device for data collection in the nacelle, and the accumulated data may be transmitted from that device to the server using a mobile network, for example.

### CITATION LIST

### PATENT DOCUMENT

PTD 1: Japanese Patent Laying-Open No. 2002-349415

### SUMMARY OF INVENTION

### TECHNICAL PROBLEM

In the case of using a device for data collection and a mobile network as described above, the cost of installing the device for data collection is required, and the cost of utilizing the mobile network is also required. Furthermore, transmission using the mobile network may be affected by the status of electric waves on the line, and data transmission to the server may be delayed.

In the case of using the mobile network for communication between the data collection device and the server, the cost of installing the device for data collection is required, and the usage fee of the mobile network is required. Furthermore, transmission using the mobile network may be affected by the status of electric waves on the line, and data transmission to the server may be delayed.

The present disclosure was devised in view of such circumstances, and has an object to provide a system for monitoring the condition of an apparatus provided in a wind turbine at low costs and with reliability.

### SOLUTION TO PROBLEM

According to an aspect of the present disclosure, a condition monitoring system for monitoring a condition of an apparatus provided in a wind turbine is provided. The condition monitoring system includes a management device configured to manage information about the apparatus, an information processing device provided in the wind turbine, a sensor provided in the apparatus, and a first communication circuit configured to transmit a detection output of the sensor to the information processing device. The information processing device includes a second communication circuit configured to transmit the detection output transmitted from the first communication circuit to the management device over a network.

Preferably, the first communication circuit transmits the detection output of the sensor to the information processing device in a near-field wireless communication system.

Preferably, the wind turbine further includes a nacelle configured to house the apparatus, and a support column configured to support the nacelle. The sensor is housed in the nacelle. The information processing device is housed in the support column.

According to another aspect of the present disclosure, a method for monitoring a condition of an apparatus provided in a wind turbine in a condition monitoring system is provided. The condition monitoring system includes a management device configured to manage information about the apparatus, a sensor provided in the apparatus, an information processing device provided in the wind turbine, and a first communication circuit configured to transmit a detection output of the sensor to the information processing device. The first communication circuit transmits the detection output of the sensor to the information processing device. The information processing device transmits the detection output transmitted from the first communication circuit to the management device over a network.

According to still another aspect of the present disclosure, a method for monitoring a condition of an apparatus provided in a wind turbine in a condition monitoring system is provided. The condition monitoring system includes a server for monitoring information about the apparatus, a sensor provided in the apparatus, a communication circuit (including a data collection device) which sends the detection output of the sensor, and an information processing device which is movable with respect to the wind turbine. The method includes the steps of causing the information processing device located at a position where the detection output sent from the communication circuit is receivable to receive the detection output, and causing the information processing device to transmit the detection output to a management device.

According to still another aspect of the present disclosure, a method for monitoring a condition of an apparatus provided in a wind turbine in a condition monitoring system is provided. The condition monitoring system includes a sensor provided in the apparatus, a communication circuit (including a data collection device) which sends the detection output of the sensor, and an information processing device which is movable with respect to the wind turbine. The method comprising the steps of causing the information processing device located at a position where the detection output sent from the communication circuit is receivable to receive the detection output, and causing the information processing device to store the detection output in a recording medium.

Preferably, the condition monitoring system includes a plurality of the wind turbines. The step of causing the information processing device to receive the detection output includes locating the information processing device at a position where the detection outputs of the sensors of the apparatuses of the plurality of the wind turbines are receivable to receive the detection outputs of the sensors.

According to still another aspect of the present disclosure, a condition monitoring system for monitoring a condition of an apparatus provided in a wind turbine is provided. The condition monitoring system includes a server which manages information about the apparatus, a sensor provided in the apparatus, a first communication circuit (including a data collection device) which sends a detection output of the sensor, and an information processing device which is movable with respect to the wind turbine. The information processing device includes a second communication circuit configured to receive the detection output while being located at a position where the detection output sent from the first communication circuit (including the data collection device) is receivable. The second communication circuit transmits the detection output to a management device over a network.

### ADVANTAGEOUS EFFECTS OF INVENTION

According to the present disclosure, a sensor is provided for an apparatus provided in a wind turbine. A detection output of the sensor is transmitted to an information processing device provided in the wind turbine. The information processing device transmits the detection output of the sensor to a management device over a network.

Accordingly, the condition monitoring system does not require any special device for accumulating the detection output of the sensor. The detection output of the sensor is transmitted from the information processing device to the management device utilizing communication over the network. For this reason, the condition monitoring system does not need to use a telephone line. Therefore, the condition monitoring system can be reduced in cost, and can reliably transmit the detection output of the sensor to the management device.

According to the present disclosure, a sensor is provided for an apparatus provided in a wind turbine. The detection output of the sensor is transmitted to the information processing device which is movable with respect to the wind turbine.

The information processing device transmits the detection output of the sensor to the server over the network.

The information processing device stores the detection output of the sensor in the recording medium. The detection output stored in the recording medium may be read in the server to be used for processing such as analysis.

Accordingly, the wind turbine does not require any special device for accumulating the detection output of the sensor. The detection output of the sensor is transmitted from the information processing device to the server using communication over the network, or transferred through the recording medium. Since the detection output of the sensor is thereby sent to the server, it is not necessary to use a telephone line. Therefore, the condition monitoring system can be reduced in cost, and can reliably transmit the detection output of the sensor to the server.

### BRIEF DESCRIPTION OF DRAWINGS

Fig. 1 shows an example of the outline of a configuration of a condition monitoring system according to a first embodiment.
Fig. 2 shows an example of a hardware configuration of a vibration sensor.
Fig. 3 shows an example of a hardware configuration of an information processing device.
Fig. 4 shows an example of a hardware configuration of a management server.
Fig. 5 shows a variation of the outline of a configuration of a condition monitoring system.
Fig. 6 shows an example of the outline of a configuration of a condition monitoring system according to a second embodiment.
Fig. 7 shows an example of a hardware configuration of a vibration sensor, a data collection device and a wireless communication device.
Fig. 8 shows a variation of the outline of a configuration of a condition monitoring system.

### DESCRIPTION OF EMBODIMENTS

Hereinafter, embodiments of the present invention will be described with reference to the drawings. In the following explanation, identical or corresponding parts will be designated by the same reference numerals. They also have the same names and functions. Therefore, the detailed description thereof will not be repeated.

### <First Embodiment>

### [Outline of Condition Monitoring System]

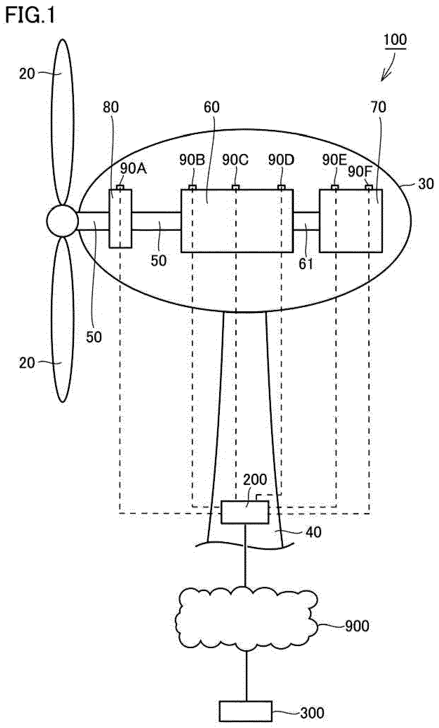

First, the outline of a configuration of a first embodiment of a condition monitoring system of the present disclosure will be described. Fig. 1 shows an example of the outline of a configuration of the condition monitoring system.

As shown in Fig. 1, the condition monitoring system includes a wind turbine 100, an information processing device 200 and a management server 300. Information processing device 200 acquires a detection output indicating the condition of an apparatus in wind turbine 100 for transmission to management server 300. Management server 300 manages the above-described detection output. For example, management server 300 manages data for an administrator to compare the detection output with a predetermined threshold value and to notify an abnormality to a predetermined terminal based on a result of the comparison.

### (Configuration of Wind Turbine 100)

Wind turbine 100 mainly includes blades 20, a nacelle 30 (housing), and a support column 40. Inside nacelle 30, apparatuses (a main shaft 50, a gearbox 60, a power generator 70, and a main bearing 80) of wind turbine 100 and vibration sensors 90A to 90F are arranged. Vibration sensor 90A detects vibration of main bearing 80. Vibration sensors 90B, 90C and 90D detect vibration of gearbox 60. Vibration sensors 90E and 90F detect vibration of power generator 70. In the present specification, when describing a configuration common to vibration sensors 90A to 90F, vibration sensors 90A to 90F will be collectively called "vibration sensor 90."

Nacelle 30 is arranged at the top of support column 40 (that is, at a high position) installed on the ground (not shown). Nacelle 30 is rotatable about the axis of support column 40. Blades 20 are connected to one end of main shaft 50 protruding out of nacelle 30. Main shaft 50 is arranged inside nacelle 30, and is rotatable by wind power received by blades 20.

Gearbox 60 is connected to main shaft 50 at the other end opposite to the one end to which blades 20 are connected. Gearbox 60 accelerates rotation of main shaft 50, and outputs the accelerated rotation of main shaft 50 to power generator 70 via an output shaft 61. Gearbox 60 is constituted of a gear acceleration mechanism including a planetary gear or an intermediate shaft, a high-speed shaft, and the like, for example.

Power generator 70 is connected to gearbox 60 on a side opposite to main bearing 80. Power generator 70 is connected to gearbox 60 via output shaft 61, and generates electric power by the rotation output from gearbox 60. Power generator 70 is an induction generator, for example.

Main bearing 80 is arranged adjacent to gearbox 60, and supports main shaft 50 to be rotatable about the axis thereof. Main bearing 80 is a rolling bearing, for example, such as a self-aligning roller bearing, a conical roller bearing, a cylindrical roller bearing, or a ball bearing. Further, such a bearing may be a single-row or multi-row bearing.

Although the rated output of wind turbine 100 is not particularly limited, it is higher than 500 kW, for example.

In wind turbine 100, first, blades 20 receive wind power and rotate, and thereby main shaft 50 connected to blades 20 is rotated while being supported by main bearing 80. The rotation of main shaft 50 is transmitted to gearbox 60 and accelerated, and is converted into rotation of output shaft 61. Then, the rotation of output shaft 61 is transmitted to power generator 70, and electromotive force is generated in power generator 70 by an electromagnetic induction action.

### (Configuration of Condition Monitoring System)

Next, the overall configuration of the condition monitoring system will be described. The condition monitoring system is a system for monitoring damaged and deteriorated states of the apparatuses (main shaft 50, gearbox 60, power generator 70, and main bearing 80) of wind turbine 100.

In the condition monitoring system, first, information processing device 200 acquires detection outputs of vibration sensors 90A to 90F. More specifically, information processing device 200 is arranged inside support column 40. Each of vibration sensors 90A to 90F transmits the detection output of each sensor to information processing device 200 regularly, periodically (at certain time intervals), or when preset conditions are satisfied. The mode of transmission may be in conformity with the near-field wireless communication system, such as WiFi (Wireless Fidelity), or may be wired communication, for example. In the present specification, transmission in conformity with the near-field wireless communication system will be employed and described as an example of the transmission.

Information processing device 200 transmits the above-described detection outputs to management server 300 over a network 900. Network 900 is a public circuit, such as the Internet, for example. Information processing device 200 is connected to network 900 over a LAN (Local Area Network), for example.

Management server 300 monitors the above-described detection outputs. Specifically, for example, a control device (CPU (Central Processing Unit) 31 which will be described later) in management server 300 causes the detection outputs to be displayed and/or transmits the detection outputs to a predetermined terminal or the like. The above-described control device compares the detection outputs with a preset threshold value, and to be displayed a result of the comparison to be displayed and/or transmits the result of the comparison to a predetermined terminal or the like.

### [Hardware Configuration]

Next, a hardware configuration of each component in the condition monitoring system will be described.

### (Vibration Sensor 90)

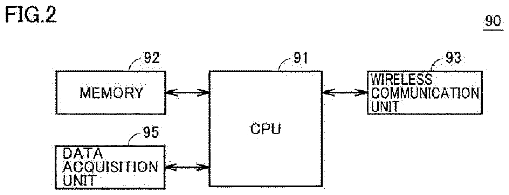

Fig. 2 shows an example of a hardware configuration of vibration sensor 90. As shown in Fig. 2, vibration sensor 90 mainly includes a CPU (Central Processing Unit) 91 for executing various types of processing, a memory 92 for storing programs to be executed by CPU 91, data and the like, a wireless communication unit 93 for communication with an external apparatus such as information processing device 200, and a data acquisition unit 95 composed of components for acquiring data about vibration of an apparatus to which vibration sensor 90 is attached. Wireless communication unit 93 is implemented by a WiFi module by which communication can be made in the WiFi system, for example.

### (Information Processing Device 200)

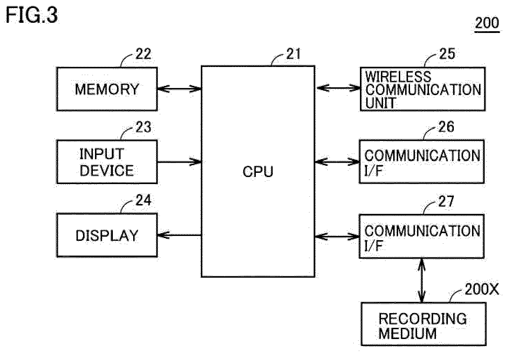

Fig. 3 shows an example of a hardware configuration of information processing device 200.

As shown in Fig. 3, information processing device 200 includes as main components a CPU 21, a memory 22, an input device 23, a display 24, a wireless communication unit 25, a communication interface (I/F) 26, and a media I/F 27.

CPU 21 reads and executes a program stored in memory 22 to control the operation of each part of information processing device 200. Memory 22 is implemented by a RAM (Random Access Memory), a ROM (Read-Only Memory), a flash memory, or the like.

Input device 23 is implemented by a mouse, a keyboard and the like for use in a general-purpose computer, for example. A user can input information to information processing device 200 through input device 23. Display 24 is implemented by a device capable of displaying information, such as a liquid crystal display, a plasma display or the like, for example. Display 24 can display various types of information including a computation result obtained by CPU 21 and data input to information processing device 200, for example.

Wireless communication unit 25 transmits/receives a signal for wireless communication in conformity with the near-field wireless communication system, such as WiFi. Information processing device 200 thereby receives a detection output of vibration sensor 90 transmitted from vibration sensor 90.

Communication I/F 26 is a communication interface for exchanging a various types of data with other communication devices including management server 300 in a communication mode for communication over a network. Communication I/F 26 is implemented by an adapter, a connector and the like, for example.

Media I/F 27 reads information recorded on a recording medium 200X which is removable from information processing device 200. Media I/F 27 may also write information into recording medium 200X. As recording medium 200X, various types of recording media, such as a USB (Universal Serial Bus) memory, a CD-ROM, a flexible disk, a flash memory, and the like may be adopted, for example. CPU 21 may execute a program stored in recording medium 200X.

### (Management Server 300)

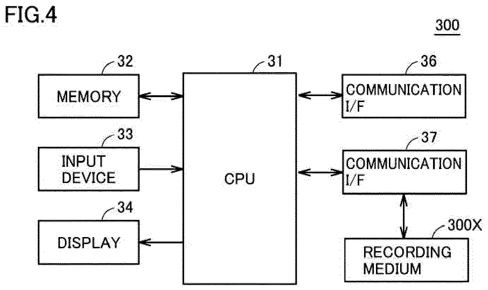

Fig. 4 shows an example of a hardware configuration of management server 300. As shown in Fig. 4, management server 300 includes as main components a CPU 31, a memory 32, an input device 33, a display 34, a communication interface (I/F) 36, and a media I/F 37.

CPU 31 reads and executes a program stored in memory 32 to control the operation of each part of management server 300. Memory 32 is implemented by a RAM, a ROM, a flash memory, or the like.

Input device 33 is implemented by a mouse, a keyboard and the like for use in a general-purpose computer, for example. A user can input information to management server 300 through input device 33. Display 34 is implemented by a device capable of displaying information, such as a liquid crystal display, a plasma display or the like, for example. Display 34 can display various types of information including a computation result obtained by CPU 31 and data input to management server 300, for example.

Wireless communication unit 25 transmits/receives a signal for wireless communication in conformity with the near-field wireless communication system, such as WiFi. Management server 300 thereby receives a detection output of vibration sensor 90 transmitted from vibration sensor 90.

Communication I/F 36 is a communication interface for exchanging a various types of data with other communication devices including information processing device 200 in a communication mode for communication over a network. Communication I/F 36 is implemented by an adapter, a connector and the like, for example.

Media I/F 37 reads information recorded on a recording medium 300X which is removable from management server 300. Media I/F 37 may also write information into recording medium 300X. As recording medium 300X, various types of recording media, such as a USB memory, a CD-ROM, a flexible disk, a flash memory, and the like may be adopted, for example. CPU 31 may execute a program stored in recording medium 300X.

### [Summary of First Embodiment]

In the first embodiment of the present disclosure described above, the condition monitoring system includes the management device (management server 300) for managing information about apparatuses, the information processing device (information processing device 200) provided in the wind turbine, and the sensors (vibration sensors 90A to 90F excluding wireless communication unit 93) provided in the apparatuses. Vibration sensor 90 includes a first communication circuit (wireless communication unit 93) for transmitting a detection output of the sensor to the information processing device.

In the present disclosure, each of vibration sensors 90A to 90F is described as including wireless communication unit 93. Wireless communication unit 93 may be provided separately from each of vibration sensors 90A to 90F. Accordingly, existing wind turbine 100 can be applied to the condition monitoring system of the present disclosure by connecting wireless communication unit 93 to vibration sensors 90A to 90F having no communication function.

In the first embodiment of the present disclosure, the information processing device (information processing device 200) includes a second communication circuit (communication I/F 26) for transmitting the detection output transmitted from the first communication circuit to the management device (management server 300) over a network.

Transmission of the detection output of each of vibration sensors 90A to 90F from vibration sensors 90A to 90F to information processing device 200 is preferably implemented by the near-field wireless communication system, such as the WiFi system. The operation of connecting each of vibration sensors 90A to 90F in nacelle 30 arranged at a relatively high position with information processing device 200 by wires and the operation of adjusting the connection may thus be eliminated. However, the present disclosure does not exclude wired communication between vibration sensor 90 and information processing device 200.

In the first embodiment of the present disclosure, information processing device 200 is preferably arranged inside support column 40. Information processing device 200 can thereby be arranged at a stable place than when provided in nacelle 30 arranged at a relatively high position. However, the placement position of information processing device 200 is not limited to the inside of support column 40 as long as communication with vibration sensor 90 can be made at that position in the near-field wireless communication system.

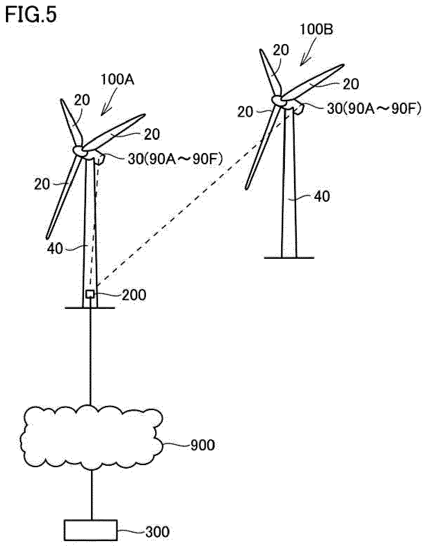

In the first embodiment of the present disclosure, information processing device 200 is provided for each wind turbine 100. There may be a case where a plurality of wind turbines 100 are provided adjacent to one another in the condition monitoring system, and where vibration sensor 90 in a certain wind turbine 100 can communicate with information processing device 200 provided in support column 40 of adjacent wind turbine 100 in the near-field wireless communication system. In such a case, as shown in Fig. 5, for example, information processing device 200 may receive detection outputs from vibration sensors 90 of plurality of wind turbines 100 for transmission to management server 300.

The following are examples of timing when the above-described detection output is transmitted from information processing device 200 to management server 300. However, these are for the purpose of illustration, and the timing of transmission is not limited to them.
1) A time preset in information processing device 200
2) When transmission is requested from management server 300

The condition monitoring system shown in Fig. 5 includes a wind turbine 100A and a wind turbine 100B adjacent to wind turbine 100A. In the condition monitoring system shown in Fig. 5, information processing device 200 provided in support column 40 of wind turbine 100A receives a detection output transmitted from vibration sensor 90 in nacelle 30 of wind turbine 100A and a detection output transmitted from vibration sensor 90 in nacelle 30 of wind turbine 100B. Information processing device 200 provided in support column 40 of wind turbine 100A is arranged at a position where a signal transmitted from vibration sensor 90 in nacelle 30 of wind turbine 100B is receivable. That is, in the example shown in Fig. 5, wind turbines 100A and 100B are spaced such that above-described information processing device 200 can receive a signal transmitted from vibration sensor 90 in nacelle 30 of wind turbine 100B.

In the present disclosure, the vibration sensor is employed for illustrating a sensor for detecting the condition of an apparatus provided in wind turbine 100. The type of the above-described sensor is not limited to a vibration sensor. All types of sensors may be applied to the condition monitoring system of the present disclosure.

### <Second Embodiment>

### [Outline of Condition Monitoring System]

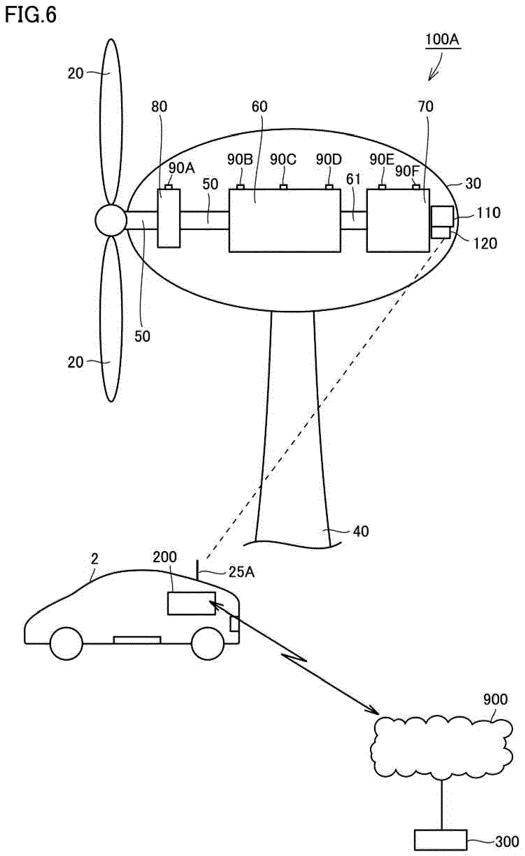

First, the outline of a configuration of an embodiment of a condition monitoring system of the present disclosure will be described. Fig. 6 shows an example of the outline of a configuration of the condition monitoring system. As shown in Fig. 6, the condition monitoring system includes wind turbine 100A, information processing device 200 and management server 300.

Information processing device 200 includes an antenna 25A, is mounted on vehicle 2, and is movable with respect to wind turbine 100A. When vehicle 2 moves, information processing device 200 is moved to a position where a detection output of a sensor in wind turbine 100A transmitted from a wireless communication device 120 is receivable. Information processing device 200 then acquires the detection output, and transmits the detection output to management server 300.

Management server 300 manages the above-described detection output. For example, management server 300 compares the detection output with a predetermined threshold value, and notifies an abnormality to a predetermined terminal based on a result of the comparison.

### (Configuration of Wind Turbine 100A)

Wind turbine 100A mainly includes blades 20, nacelle 30 (housing) and support column 40. Inside nacelle 30, apparatuses (main shaft 50, gearbox 60, power generator 70, and main bearing 80) of wind turbine 100A, vibration sensors 90A to 90F, a data collection device 110, and wireless communication device 120 are arranged. Vibration sensor 90A detects vibration of main bearing 80. Vibration sensors 90B, 90C and 90D detect vibration of gearbox 60. Vibration sensors 90E and 90F detect vibration of power generator 70. In the present specification, when describing a configuration common to vibration sensors 90A to 90F, vibration sensors 90A to 90F will be collectively called "vibration sensor 90."

Data collection device 110 collects data such as detection results in vibration sensor 90, and stores the data therein (for example, temporarily). Wireless communication device 120 transmits the data stored in data collection device 110 to information processing device 200.

Nacelle 30 is arranged at the top of support column 40 (that is, at a high position) installed on the ground (not shown). Nacelle 30 is rotatable about the axis of support column 40. Blades 20 are connected to one end of main shaft 50 protruding out of nacelle 30. Main shaft 50 is arranged inside nacelle 30, and is rotatable by wind power received by blades 20.

Gearbox 60 is connected to main shaft 50 at the other end opposite to the one end to which blades 20 are connected. Gearbox 60 accelerates rotation of main shaft 50, and outputs the accelerated rotation of main shaft 50 to power generator 70 via output shaft 61. Gearbox 60 is composed of a gear acceleration mechanism including a planetary gear or an intermediate shaft, a high-speed shaft, and the like, for example.

Power generator 70 is connected to gearbox 60 on a side opposite to main bearing 80. Power generator 70 is connected to gearbox 60 via output shaft 61, and generates electric power by the rotation output from gearbox 60. Power generator 70 is an induction generator, for example.

Main bearing 80 is arranged adjacent to gearbox 60, and supports main shaft 50 to be rotatable about the axis thereof. Main bearing 80 is a rolling bearing, for example, such as a self-aligning roller bearing, a conical roller bearing, a cylindrical roller bearing, or a ball bearing. Further, such a bearing may be a single-row or multi-row bearing.

Although the rated output of wind turbine 100A is not particularly limited, it is higher than 500 kW, for example.

In wind turbine 100A, first, blades 20 receive wind power and rotate, and thereby main shaft 50 connected to blades 20 is rotated while being supported by main bearing 80. The rotation of main shaft 50 is transmitted to gearbox 60 and accelerated, and is converted into rotation of output shaft 61. Then, the rotation of output shaft 61 is transmitted to power generator 70, and electromotive force is generated in power generator 70 by an electromagnetic induction action.

### (Configuration of Condition Monitoring System)

Next, the overall configuration of the condition monitoring system will be described. The condition monitoring system is a system for monitoring damaged and deteriorated states of the apparatuses (main shaft 50, gearbox 60, power generator 70, and main bearing 80) of wind turbine 100A.

In the condition monitoring system, first, information processing device 200 acquires detection outputs of vibration sensors 90A to 90F. More specifically, information processing device 200 is moved to a position at which the detection outputs of vibration sensors 90A to 90F are receivable when vehicle 2 moves as described above, and then acquires the detection outputs. Each of vibration sensors 90A to 90F transmits the detection output of each sensor regularly, periodically (at certain time intervals), or when preset conditions are satisfied. The mode of transmission may be in conformity with the near-field wireless communication system, such as WiFi (Wireless Fidelity).

Information processing device 200 transmits the above-described detection outputs to management server 300 over network 900. Network 900 is a public circuit, such as the Internet, for example. Information processing device 200 is connected to network 900 over a LAN (Local Area Network), for example.

Management server 300 monitors the above-described detection outputs. Specifically, for example, a control device (CPU (Central Processing Unit) 31 which will be described later) in management server 300 analyzes the detection outputs, causes a result of the analysis to be displayed and/or transmits the result of the analysis to a predetermined terminal or the like. The above-described control device compares the detection outputs with a preset threshold value, and causes a result of the comparison to be displayed and/or transmits the result of the comparison to a predetermined terminal or the like.

### [Hardware Configuration]

Next, a hardware configuration of each component of the condition monitoring system will be described.

### (Vibration Sensor 90, Data Collection Device 110 and Wireless Communication Device 120)

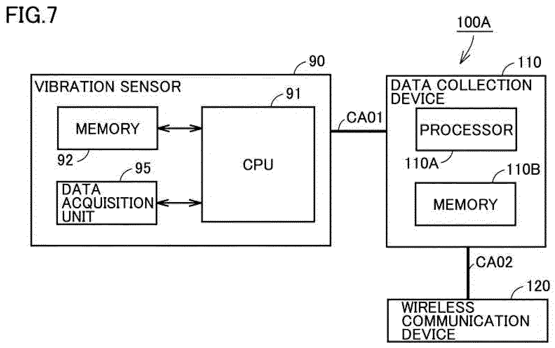

Fig. 7 shows an example of a hardware configuration of vibration sensor 90, data collection device 110 and wireless communication device 120. As shown in Fig. 7, vibration sensor 90 mainly includes CPU 91 for executing various types of processing, memory 92 for storing programs to be executed by CPU 91, data and the like, and data acquisition unit 95 composed of components for acquiring data about vibration of the apparatuses to which vibration sensor 90 is attached.

Data collection device 110 includes a processor 110A and a memory 110B. Data collection device 110 is connected to each vibration sensor 90 by a cable CA01. Processor 110A stores the detection output of each vibration sensor 90 in memory 110B.

Wireless communication device 120 is implemented by a WiFi module which can make communication in the WiFi system, for example, and is connected to data collection device 110 by a cable CA02. Processor 110A of data collection device 110 can transmit data such as the detection output of vibration sensor 90 to information processing device 200 through wireless communication device 120. A "communication circuit" according to the present invention is implemented by wireless communication device 120.

### (Information Processing Device 200 and Management Server 300)

An example of a hardware configuration of information processing device 200 and management server 300 according to the second embodiment may be shown in Figs. 3 and 4.

### [Summary of Second Embodiment]

In the second embodiment, a method for monitoring the condition of apparatuses provided in wind turbine 100A in the condition monitoring system is provided. More specifically, the condition monitoring system includes the server (management server 300) for managing information about the apparatuses, the sensors (vibration sensors 90A to 90F) provided in the apparatuses, the communication circuit (wireless communication device 120) for sending the detection outputs of the sensors, and the information processing device (information processing device 200) which is movable with respect to the wind turbine. While being located at a position where the detection outputs sent by the communication circuit are receivable, the information processing device receives the above-described detection outputs. The information processing device transmits the above-described detection outputs to the management device.

The information processing device may store the above-described detection outputs in recording medium 200X (see Fig. 3) instead of transmitting them to management server 300. In the condition monitoring system, management server 300 may conduct analysis or the like of the detection outputs by reading the detection outputs stored in the recording medium through media I/F 37.

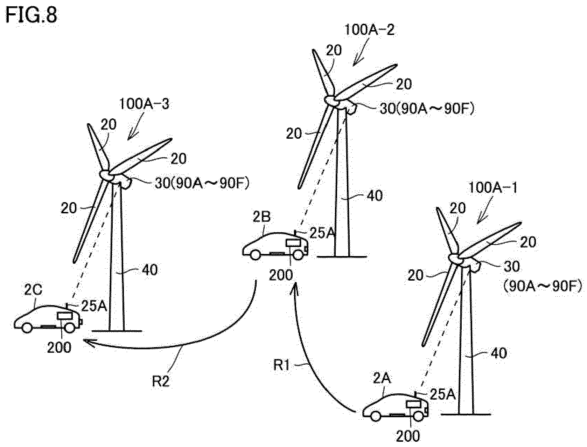

The condition monitoring system may include plurality of wind turbines 100A. As shown in Fig. 8, when vehicle 2 moves, information processing device 200 may be moved to a position where it can detect a signal (detection output) sent from vibration sensor 90 provided in each of above-described plurality of wind turbines 100A.

More specifically, the condition monitoring system shown in Fig. 8 includes three wind turbines 100A-1, 100A-2 and 100A-3. When the vehicle is at the position indicated as 2A, information processing device 200 receives the detection outputs of vibration sensors 90A to 90F in nacelle 30 of wind turbine 100A-1 from wireless communication device 120.

Next, vehicle 2 moves along an arrow R1, thereby moving from the position indicated as vehicle 2A to a position indicated as vehicle 2B. When the vehicle is at the position indicated as 2B, information processing device 200 receives the detection outputs of vibration sensors 90A to 90F in nacelle 30 of wind turbine 100A-2.

Next, vehicle 2 moves along an arrow R2, thereby moving from the position indicated as vehicle 2B to a position indicated as vehicle 2C. When the vehicle is at the position indicated as 2C, information processing device 200 receives the detection outputs of vibration sensors 90A to 90F in nacelle 30 of wind turbine 100A-3.

As described above, information processing device 200 receives the detection outputs of vibration sensors 90A to 90F provided in each of wind turbines 100A-1, 100A-2 and 100A-3. Then, management server 300 acquires the detection outputs received by information processing device 200 over network 900 or through recording medium 200X.

The following are examples of timing when the above-described detection output is transmitted from information processing device 200 to management server 300. However, these are for the purpose of illustration, and the timing of transmission is not limited to them.
1) Immediately after information processing device 200 acquires the above-described detection outputs
2) A time preset in information processing device 200
3) When transmission is requested from management server 300
4) When information processing device 200 has acquired detection outputs from all wind turbines 100A as intended (for example, wind turbines 100A-1, 100A-2 and 100A-3)

In the present disclosure, the vibration sensor is employed for illustrating a sensor for detecting the condition of an apparatus provided in wind turbine 100A. The type of the above-described sensor is not limited to a vibration sensor. All types of sensors may be applied to the condition monitoring system of the present disclosure.

It should be understood that the embodiments disclosed herein are illustrative and non-restrictive in every respect. The scope of the present invention is defined by the scope of the claims, rather than the description above, and is intended to include any modifications within the scope and meaning equivalent to the scope of the claims.

### REFERENCE SIGNS LIST

20: blade; 25, 93: wireless communication unit; 25A: antenna; 26, 36: communication I/F; 30: nacelle; 40: support column; 50: main shaft; 60: gearbox; 61: output axis; 70: power generator; 80: main bearing; 90, 90A-90F: vibration sensor; 95: data acquisition unit; 100, 100A: wind turbine; 200: information processing device; 200X, 300X: recording medium; 300: management server; 900: network.

## Claims

1. A condition monitoring system for monitoring a condition of an apparatus provided in a wind turbine, the condition monitoring system comprising:
a management device configured to manage information about the apparatus;
an information processing device provided in the wind turbine;
a sensor provided in the apparatus; and
a first communication circuit configured to transmit a detection output of the sensor to the information processing device,
the information processing device including a second communication circuit configured to transmit the detection output transmitted from the first communication circuit to the management device over a network.

2. The information monitoring system according to claim 1, wherein the first communication circuit is configured to transmit the detection output of the sensor to the second communication circuit in a near-field wireless communication system.

3. The condition monitoring system according to claim 1 or 2, further comprising:
a nacelle for housing the apparatus; and
a support column for supporting the nacelle, wherein
the sensor is housed in the nacelle, and
the information processing device is housed in the support column.

4. A method for monitoring a condition of an apparatus provided in a wind turbine in a condition monitoring system,
the condition monitoring system including a management device configured to manage information about the apparatus, a sensor provided in the apparatus, an information processing device provided in the wind turbine, and a first communication circuit configured to transmit a detection output of the sensor to the information processing device, the method comprising the steps of:
transmitting, by the first communication circuit the detection output of the sensor to the information processing device,
transmitting, by the information processing device the detection output transmitted from the first communication circuit to the management device over a network.

5. A method for monitoring a condition of an apparatus provided in a wind turbine in a condition monitoring system,
the condition monitoring system including a management device configured to manage information about the apparatus, a sensor provided in the apparatus, a communication circuit configured to send a detection output of the sensor, and an information processing device which is movable with respect to the wind turbine, the method comprising the steps of:
causing the information processing device located at a position where the detection output sent from the communication circuit is receivable to receive the detection output; and
causing the information processing device to transmit the detection output to the management device.

6. A method for monitoring a condition of an apparatus provided in a wind turbine in a condition monitoring system,
the condition monitoring system including a sensor provided in the apparatus, a communication circuit configured to send a detection output of the sensor, and an information processing device which is movable with respect to the wind turbine, the method comprising the steps of:
causing the information processing device located at a position where the detection output sent from the communication circuit is receivable to receive the detection output; and
causing the information processing device to store the detection output in a recording medium.

7. The method according to claim 5 or 6, wherein
the condition monitoring system includes a plurality of the wind turbines, and the step of causing the information processing device to receive the detection output includes locating the information processing device at a position where the detection outputs of the sensors of the apparatuses of the plurality of the wind turbines are receivable to receive the detection outputs of the sensors.

8. A condition monitoring system for monitoring a condition of an apparatus provided in a wind turbine, the condition monitoring system comprising:
a management device configured to manage information about the apparatus;
a sensor provided in the apparatus;
a first communication circuit configured to send a detection output of the sensor; and
an information processing device which is movable with respect to the wind turbine,
the information processing device including a second communication circuit configured to receive the detection output while being located at a position where the detection output sent from the first communication circuit is receivable,
the second communication circuit transmitting the detection output to the management device over a network.
